# EUROPÄISCHE PATENTSCHRIFT

(11) **EP 3 766 828 B1**
(45) Veröffentlichungstag und Bekanntmachung des Hinweises auf die Patenterteilung: **14.10.2026**
(21) Anmeldenummer: 20166631.0
(22) Anmeldetag: 30.03.2020
(51) Int. Cl.: B67D 1/00, E03C 1/04

(54) **SANITÄRARMATUR ZUM ABGEBEN VON AUFBEREITETEN FLÜSSIGKEITEN**
SANITARY FITTING FOR DISPENSING PROCESSED LIQUIDS
ARMATURE SANITAIRE DESTINÉE À LA DISTRIBUTION DES LIQUIDES TRAITÉS

(30) Priorität: 15.07.2019 DE 102019210435
(43) Veröffentlichungstag der Anmeldung: 20.01.2021
(73) Patentinhaber: BLANCO GmbH + Co KG, 75038 Oberderdingen (DE)
(72) Erfinder: Funke, Thomas, 75031 Eppingen (DE); Kaya, Özkan, 76703 Kraichtal (DE)
(74) Vertreter: Ullrich & Naumann PartG mbB

(56) Entgegenhaltungen:
- EP-A1- 0 577 164
- WO-A2-2007/113663
- US-A1- 2007 152 074
- US-A1- 2012 266 983
- US-A1- 2015 037 464

## Beschreibung

Die Erfindung betrifft eine Sanitärarmatur zum Abgeben von aufbereiteten Flüssigkeiten, insbesondere für Getränke, umfassend ein erstes Stellelement zur Mengeneinstellung der abzugebenden, aufbereiteten Flüssigkeit und ein Betätigungselement zum Bereitstellen der mittels des ersten Stellelements eingestellten Menge an aufbereiteter Flüssigkeit.

Die Erfindung betrifft weiter ein Sanitärsystem zum Bereitstellen und Abgeben von aufbereiteten Flüssigkeiten, insbesondere für Getränke.

Sanitärarmaturen sind in vielfältigster Weise bekannt geworden. Bekannte Sanitärarmaturen weisen beispielsweise einen Armaturenkörper mit zumindest einem Stellglied zur Einstellung zumindest einer Eigenschaft eines durch die Sanitärarmatur geleiteten Fluidstroms auf. Bei der Eigenschaft kann es sich beispielsweise um die Durchflussmenge des Fluidstroms oder die Temperatur des Fluidstroms handeln. Bei bekannten Sanitärarmaturen wird der Fluidstrom beispielsweise aus einem getrennten Kaltwasser- und Warmwasserstrom mittels einer Mischbatterie gemischt und von dort zu einem Auslauf geleitet.

Zur Erhöhung der Funktionalität ist beispielsweise aus der DE 10 2013 000 773 A1 oder der DE 10 2013 002 236 A1 eine Sanitärarmatur bekannt geworden mit zumindest einem ersten Betätigungselement zur Temperatur- und/oder Mengeneinstellung von Mischwasser und mit zumindest einem zweiten Betätigungselement zur Mengeneinstellung von Heißwasser. Das zweite Betätigungselement, welches ein Einstellen der Menge von Heißwasser ermöglicht, ist dabei als Drehwahlschalter ausgebildet. Dieser muss zunächst in eine erste Richtung gedreht werden, um die Heißwasserfunktion zu aktivieren. Anschließend muss dieser in die der ersten Richtung entgegengesetzte Richtung gedreht werden, um die gewünschte Menge an Heißwasser einzustellen. Weitere Sanitärarmaturen sind aus der US 2012/0266983 A1, der EP 0 577 164 A1, der WO 2007/113663 A1, der US 2015/037464 A1 und der US 2007/0152074 A1 bekannt geworden.

Nachteilig dabei ist, dass die Bedienung des zweiten Betätigungselements aufwendig und kompliziert ist. Gleichzeitig ist die Flexibilität hinsichtlich der Bereitstellung von unterschiedlich aufbereiteten Fluidströmen erheblich eingeschränkt.

Eine Aufgabe der vorliegenden Erfindung ist es daher, eine Sanitärarmatur zum Abgeben von aufbereiteten Flüssigkeiten, insbesondere für Getränke und ein entsprechendes Sanitärsystem bereitzustellen, welche eine einfache Bedienbarkeit, eine hohe Flexibilität und eine kostengünstige Implementierung ermöglichen.

Eine weitere Aufgabe der vorliegenden Erfindung ist es, eine alternative Sanitärarmatur und ein alternatives Sanitärsystem bereitzustellen.

Die vorliegende Erfindung löst die Aufgaben in einer Ausführungsform mit einer Sanitärarmatur gemäß Anspruch 1.

Die vorliegende Erfindung löst die Aufgaben in einer weiteren Ausführungsform mit einem Sanitärsystem gemäß Anspruch 7.

Der Begriff "aufbereitete Flüssigkeit" ist im weitesten Sinne zu verstehen und bezieht sich insbesondere in den Ansprüchen, vorzugsweise in der Beschreibung auf Flüssigkeiten, insbesondere Wasser in Form von Leitungswasser von einem Wasserversorger oder dergleichen, welches durch eine separate Einrichtung zusätzlich in seinen Eigenschaften und/oder in seiner Zusammensetzung verändert wird. So kann beispielsweise aufbereitetes Wasser eine hohe Temperatur, sogenanntes Heißwasser, einen anderen Karbonisierungsgrad, eine teilweise andere Zusammensetzung oder dergleichen als vom Wasserversorger ursprünglich bereitgestelltes Wasser aufweisen. Unter dem Begriff "aufbereitete Flüssigkeit" ist insbesondere kein Warm- oder Kaltwasser zu verstehen, welches üblicherweise von einem Wasserversorger einem Einfamilienhaus, Mehrfamilienhaus oder dergleichen bereitgestellt wird und über eine Heizung oder dergleichen in seiner Temperatur gegebenenfalls angepasst ist.

Der Begriff "Neutralflüssigkeit" ist im weitesten Sinne zu verstehen und bezieht sich insbesondere in den Ansprüchen, vorzugsweise in der Beschreibung auf Flüssigkeiten, welche zumindest sensorisch, insbesondere geschmacklich oder vom Geruch, im Wesentlichen keine Auswirkungen auf die aufbereitete Flüssigkeit hat. Beispielsweise kann die Neutralflüssigkeit ungefiltertes oder gefiltertes Wasser sein.

Der Begriff "Aufbereitungsart" ist im weitesten Sinne zu verstehen und bezieht sich insbesondere in den Ansprüchen, vorzugsweise in der Beschreibung nicht nur auf grundlegende Art der Aufbereitung einer Flüssigkeit, beispielsweise ob das Wasser karbonisiert wurde oder nicht, sondern auch den Grad, die Intensität oder Konzentration der Aufbereitung, beispielsweise die Intensität der Karbonisierung. Unter unterschiedlichen Aufbereitungsarten sind damit beispielsweise unterschiedliche Karbonisierungsgrade zu verstehen, beispielsweise "still", "medium" oder "classic". Unter unterschiedlichen Aufbereitungsarten sind auch unterschiedliche Temperaturen von Heißwasser, unterschiedlich stark gefiltertes Wasser, unterschiedliche Konzentrationen von Geschmackszusätzen beziehungsweise Aromatisierungen, unterschiedliche Aufmineralisierungsarten und deren und unterschiedliche Konzentrationen derselben Aufmineralisierungsart oder dergleichen zu verstehen. Unter dem Begriff "Aufbereitungsart" fällt insbesondere auch ein "Nichtaufbereiten".

Einer der damit erzielten Vorteile ist, dass damit die Bedienbarkeit und Flexibilität wesentlich verbessert wird. Ein weiterer Vorteil ist, dass eine einfache und kostengünstige Implementierung beziehungsweise eine einfache und kostengünstige Durchführung ermöglicht wird.

Weitere Merkmale, Vorteile und weitere Ausführungsformen der Erfindung sind im Folgenden beschrieben oder werden dadurch offenbar.

Gemäß einer vorteilhaften Weiterbildung ist eine erste Anzeigeeinrichtung angeordnet, die ausgebildet ist, zumindest zwei verschiedene Aufbereitungsarten anzuzeigen. Dies verbessert die Bedienbarkeit der Sanitärarmatur bei gleichzeitig hoher Flexibilität bei der Auswahl verschiedener Aufbereitungsarten.

Gemäß einer weiteren vorteilhaften Weiterbildung ist eine zweite Anzeigeeinrichtung angeordnet, die ausgebildet ist, zumindest einen Betriebszustand und/oder zumindest eine Aufbereitungsart der Sanitärarmatur anzuzeigen. Dadurch wird ebenfalls die Bedienbarkeit der Sanitärarmatur verbessert, mit anderen Worten werden Fehlbedienungen reduziert.

Gemäß einer weiteren vorteilhaften Weiterbildung ist zumindest eine Anzeigeeinrichtung zur optischen und/oder akustischen Anzeige ausgebildet. Dies erhöht neben der Bedienbarkeit auch die Flexibilität, da durch verschiedene optische und/ oder akustische Signale eine Vielzahl von unterschiedlichen Betriebszuständen und/oder Aufbereitungsarten angezeigt werden können.

Gemäß einer weiteren vorteilhaften Weiterbildung ist zumindest eine Anzeigeeinrichtung und/oder zumindest eines der Stellelemente ringförmig ausgebildet. Neben einer hohen optischen Anmutung und einer besseren Wahrnehmbarkeit durch einen Benutzer der Sanitärarmatur wird damit ebenfalls die Bedienbarkeit verbessert.

Gemäß einer weiteren vorteilhaften Weiterbildung sind mittels der zumindest einen Anzeigeeinrichtung, welche zur optischen Anzeige ausgebildet ist, zumindest drei optisch verschiedene Anzeigen bereitstellbar. Damit können auf einfache Weise eine Vielzahl von möglichen Betriebszuständen oder Aufbereitungsarten angezeigt werden.

Gemäß einer weiteren vorteilhaften Weiterbildung sind zwei Anzeigeeinrichtungen angeordnet, die auf axial unterschiedlichen Seiten des ersten Stellelements angeordnet sind. Damit wird ebenfalls die Wahrnehmbarkeit verbessert, da ein Nutzer der Sanitärarmatur bei Betätigen des ersten Stellelements eine Anzeige durch die beiden Anzeigeeinrichtungen direkt und gleichzeitig wahrnehmen kann. Durch die auf unterschiedlichen Seiten des ersten Stellelements angeordneten Anzeigeeinrichtungen ist eine Verwechslung selbst bei gleichen optischen Signalen, beispielsweise für die Aufbereitungsarten einerseits, für den Betriebszustand andererseits, nahezu ausgeschlossen.

Gemäß einer weiteren vorteilhaften Weiterbildung ist das Betätigungselement mittels Berührung und/oder Drücken oder berührungslos betätigbar, insbesondere ist das Betätigungselement zur Erkennung von Gesten ausgebildet. Auf flexible Weise ist damit eine Betätigung des Betätigungselements möglich. Vorteil einer Betätigung mittels Berührung ist, dass beispielsweise einem Nutzer der Sanitärarmatur eine angenehme Haptik beim Betätigen ermöglicht werden kann. Vorteil einer Bestätigung mittels Druck ist eine direkte Rückmeldung über die erfolgte Betätigung durch einen Nutzer und der Vorteil einer berührungslosen Betätigung des Betätigungselements ist, dass eine Verschmutzung des Betätigungselements nahezu ausgeschlossen wird. Kann das Betätigungselement Gesten erkennen, wird eine unerwünschte Betätigung weiter reduziert, da nur definierte und erkannte Gesten eine Betätigung des Betätigungselements ermöglichen. Unter einer Betätigung des Betätigungselements mittels Berührung ist insbesondere ebenfalls eine Druckbetätigung einer Taste zu verstehen.

Gemäß einer weiteren vorteilhaften Weiterbildung weist das Betätigungselement eine kreisförmige Oberfläche, insbesondere einen Punkt, zur Betätigung auf. Neben einer harmonischen und optisch hochwertigen Anmutung wird eine besonders einfache Bedienbarkeit ermöglicht, wenn das Betätigungselement in Form eines kreisförmigen Knopfs, Punkts oder dergleichen ausgebildet ist.

Gemäß einer weiteren vorteilhaften Weiterbildung ist eine Einhebel-Mischbatterie zur Ausgabe von nicht-aufbereitetem Warm- und Kaltwasser angeordnet. Dies ermöglicht auf einfache und komfortable Weise eine Bereitstellung einer Mischung von Warm- und Kaltwasser.

Gemäß einer weiteren vorteilhaften Weiterbildung sind zumindest zwei separate Ausläufe angeordnet, wobei zumindest einer der Ausläufe ausschließlich zur Ausgabe des nicht-aufbereiteten Warm- und Kaltwassers ausgebildet ist und wobei der zumindest eine weitere Auslauf zur Ausgabe der aufbereiteten Flüssigkeit ausgebildet ist. Vorteil der getrennten Ausläufe ist, dass damit gleichzeitig beispielsweise Kaltwasser an dem ersten Auslass und aufbereitetes Wasser an dem zweiten Auslass unabhängig voneinander bereitgestellt werden können. Die Trennung der beiden Ausläufe ist auch aus hygienischen Gründen vorteilhaft, beispielsweise auf Grund von Restwasser.

Gemäß einer weiteren vorteilhaften Weiterbildung sind die zumindest zwei Ausläufe voneinander beabstandet angeordnet. Dies minimiert die Verwechselbarkeit der beiden Ausläufe und erhöht gleichzeitig die Flexibilität, da auf einfache Weise beide Ausläufe genutzt werden können.

Gemäß einer weiteren vorteilhaften Weiterbildung ist zumindest einer der Ausläufe beweglich angeordnet und weist eine lösbare Arretierungseinrichtung auf, die ausgebildet ist, den Auslauf an einem Element der Sanitärarmatur lösbar festzulegen, insbesondere mittels magnetischer Kraft. Einer der damit erzielten Vorteile ist eine einfache und gleichzeitig flexible Bedienbarkeit der Sanitärarmatur. Beispielsweise ist damit ein Schwenken des Auslaufs oder eine Veränderung der Höhe des Auslaufs möglich bei einfacher Lösbarkeit beziehungsweise Festlegbarkeit des Auslaufs.

Das erste und das zumindest eine zweite Stellelement sind jeweils mittels einer Drehbewegung und das zweite Stellelement zusätzlich mit einer Axialbewegung betätigbar. Damit wird eine einfache Bedienbarkeit der beiden Stellelemente bei gleichzeig hoher Flexibilität in Bezug auf verschiedene Betätigungsarten der Stellelemente ermöglicht.

Gemäß einer weiteren vorteilhaften Weiterbildung weist das zumindest eine zweite Stellelement zumindest zwei, insbesondere vier, definierte Rastpositionen bei einer Drehbewegung auf. Damit wird einem Benutzer der Sanitärarmatur eine taktile Rückmeldung ermöglicht, sodass eine ungenaue, fehleranfällige Bedienung der Sanitärarmatur reduziert wird; die Wahrscheinlichkeit einer unbeabsichtigten Betätigung wird vermindert.

Gemäß einer weiteren vorteilhaften Weiterbildung sind mehrere zweite Stellelemente angeordnet, die unabhängig voneinander betätigbar sind. Dies erhöht die Flexibilität der Sanitärarmatur bei der Auswahl und Bereitstellung unterschiedlicher Arten von aufbereitetem Wasser.

Gemäß einer weiteren vorteilhaften Weiterbildung des Sanitärsystems umfasst die Aufbereitungseinrichtung zumindest eine der folgenden Einrichtungen: Filtereinrichtung, Heizeinrichtung, Vorratseinrichtung, Konzentrationseinrichtung, Karbonisierungseinrichtung, Kühleinrichtung. Damit kann eine Vielzahl an möglichen Aufbereitungsarten für die Flüssigkeit zur Verfügung gestellt werden. Ebenso können verschiedene aufbereitete Flüssigkeiten bevorratet werden, sodass eine schnellere Abgabe bei erneuter Auswahl der jeweiligen aufbereiteten Flüssigkeit ermöglicht wird.

Gemäß einer weiteren vorteilhaften Weiterbildung des Sanitärsystems ist eine Durchflussmesseinrichtung zur Messung des Durchflusses der Flüssigkeit, insbesondere des Durchflusses von Wasser, durch die Aufbereitungseinrichtung, angeordnet. Vorteil hiervon ist, dass beispielsweise eine exakte Bereitstellung der Menge von aufbereitetem Wasser ermöglicht wird.

Gemäß einer weiteren vorteilhaften Weiterbildung des Sanitärsystems ist die Steuerungseinrichtung mit der Durchflussmesseinrichtung verbunden und ausgebildet, anhand des gemessenen Durchflusses eine Lebensdauer eines Elements der Aufbereitungseinrichtung zu berechnen und mittels zumindest einer der Anzeigeeinrichtungen der Sanitärarmatur anzuzeigen. Dies erhöht die Zuverlässigkeit des Sanitärsystems, da beispielsweise Filter der Filtereinrichtung rechtzeitig ausgetauscht werden können, sodass eine zuverlässige Filterung der Flüssigkeit, insbesondere Wasser, zu jedem Zeitpunkt ermöglicht wird.

Gemäß einer weiteren vorteilhaften Weiterbildung des Sanitärsystems sind die Filtereinrichtung über ein erstes mittels der Steuerungseinrichtung steuerbares Ventil mit der Sanitärarmatur und die Vorratseinrichtung über ein zweites mittels der Steuerungseinrichtung steuerbares Ventil mit der Sanitäreinrichtung verbunden. Mittels der steuerbaren Ventile kann auf einfache Weise beispielsweise aufbereitetes Wasser mittels der Filtereinrichtung oder von der Vorratseinrichtung bereitgestellt werden.

Gemäß einer weiteren vorteilhaften Weiterbildung ist zumindest eines der Ventile als Magnetventil ausgebildet. Dies ermöglicht eine einfache und schnelle sowie zuverlässige Betätigung des jeweiligen Ventils.

Die aufbereitete Flüssigkeit kann für eine einstellbare Zeitspanne nach Betätigen des Betätigungselements abgegeben werden. Dies erhöht den Bedienkomfort für einen Nutzer der Sanitärarmatur, da dieser lediglich die Betätigung beispielsweise mit einem Finger auslösen muss und dann beide Hände zum Abfüllen von aufbereiteten Wassers nutzen kann. Ein weiterer Vorteil ist, dass die aufbereitete Flüssigkeit mittels der eingestellten Menge beziehbar ist, wobei diese dann mittels der Messung einer Durchflussrate ermittelt wird.

Bei erneuter Betätigung des Betätigungselements während des Abgebens der aufbereiteten Flüssigkeit kann die Abgabe zumindest unterbrochen, insbesondere gestoppt, werden. Damit kann zum einen der Flüssigkeitsverbrauch gesenkt werden, wenn beispielsweise lediglich eine kleine Menge benötigt wird, andererseits kann beispielsweise für gewisse Funktionen eine schnelle Abschaltung der Abgabe der aufbereiteten Flüssigkeit bereitgestellt werden.

Zumindest eine der folgenden Aufbereitungsarten kann bereitgestellt werden: Heißwasser, gefiltertes Wasser, karbonisiertes Wasser, gekühltes Wasser, mit Konzentrat versetztes Wasser. Damit kann eine Vielzahl an möglichen Aufbereitungsarten für Wasser zur Verfügung gestellt werden.

Die Aufbereitungsart kann durch Drehen und axiales Bewegen des zumindest einen zweiten Stellelements aus einer axialen Ruheposition, insbesondere gegenüber einer Rückstellkraft ausgewählt werden. Vorteil hiervon ist, dass damit die Aufbereitungsarten auf zuverlässige Weise zur Abgabe von entsprechend aufbereiteter Flüssigkeit ausgewählt werden können.

Nach dem Auswählen zumindest einer Aufbereitungsart kann das zumindest eine zweite Stellelement in seine axiale Ruheposition zurückkehren, insbesondere mittels Federkraft. Damit wird dem Nutzer eine einheitliche Ausgangsposition des zweiten Stellelements für eine Vielzahl von Auswahlmöglichkeiten bereitgestellt; insgesamt wird so die Bedienung vereinfacht.

Die Aufbereitungsart Heißwasser kann mittels zumindest einer der Anzeigeeinrichtungen der Sanitärarmatur angezeigt werden. Vorteil hiervon ist, dass damit die Gefahr einer Fehlbedienung bei Heißwasser beziehungsweise ein versehentliches Abgeben von Heißwasser durch einen Benutzer reduziert wird.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt
- Figur 1: eine Sanitärarmatur in dreidimensionaler Ansicht gemäß einer Ausführungsform der vorliegenden Erfindung;
- Figur 2: einen dreidimensionalen Ausschnitt der Sanitärarmatur gemäß Figur 1;
- Figur 3: eine axiale Draufsicht auf eine Stellgliedeinheit der Sanitärarmatur gemäß der Figur 2;
- Figur 4: ein Sanitärsystem gemäß einer Ausführungsform der vorliegenden Erfindung;
- Figur 5: eine Steuerungseinrichtung für ein Sanitärsystem gemäß Figur 4 in schematischer Form;
- Figur 6: ein Verfahren zum Bereitstellen und Ausgeben von aufbereiteter Flüssigkeit, das nicht unter den Schutzumfang der vorliegenden Ansprüche
fällt; und

- Figur 7: einen dreidimensionalen Ausschnitt einer Sanitärarmatur gemäß einer Ausführungsform der vorliegenden Erfindung.

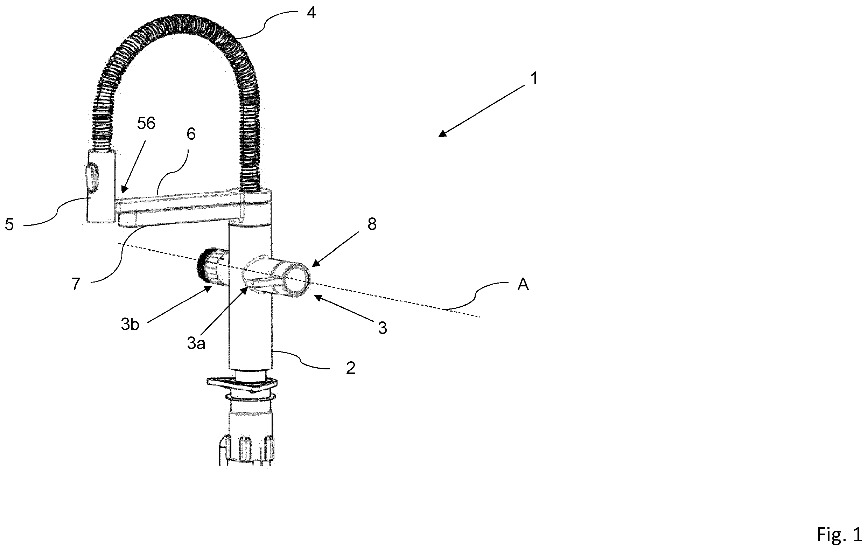

Figur 1 zeigt in dreidimensionaler Ansicht eine Sanitärarmatur gemäß einer Ausführungsform der vorliegenden Erfindung.

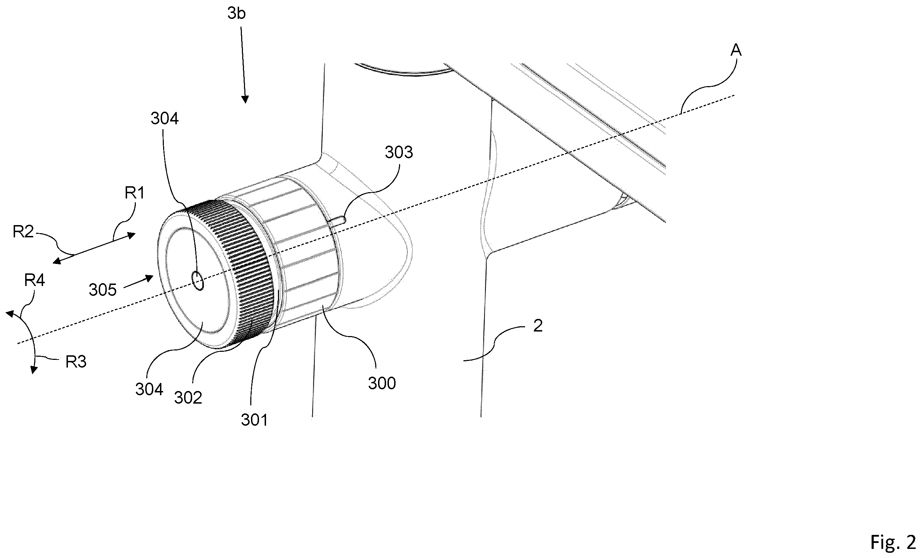

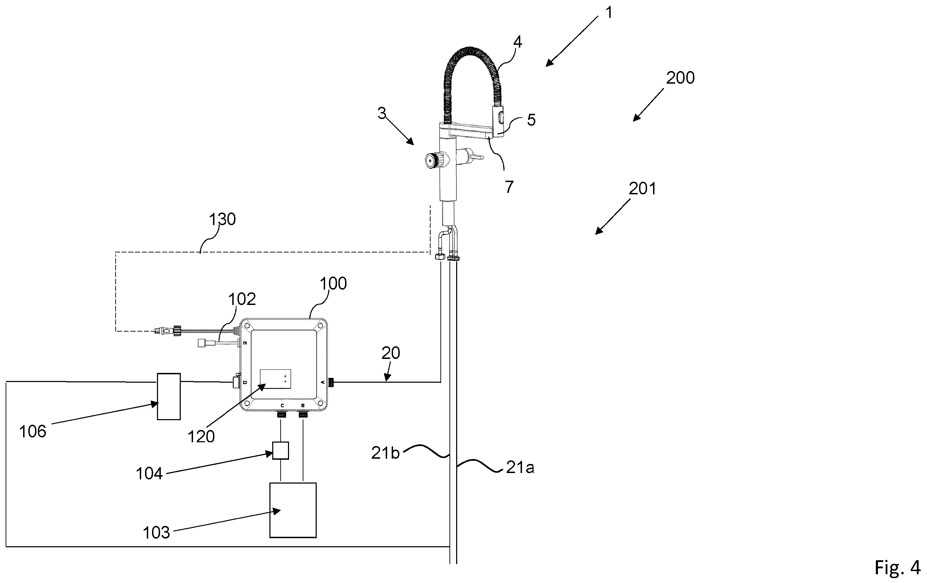

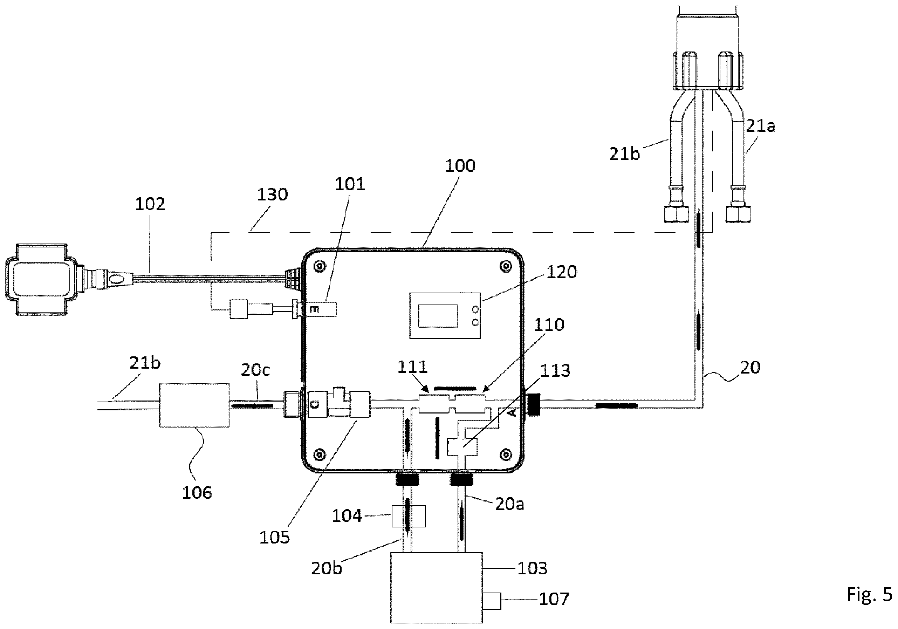

Im Detail ist in Figur 1 eine Sanitärarmatur 1 für Küchen gezeigt. Die Sanitärarmatur 1 ist Teil eines Sanitärsystems 200 der Figuren 4 und 5. Die Sanitärarmatur 1 umfasst dabei einen zylinderförmigen Armaturenkörper 2, an dem senkrecht zur Zylinderachse, also entlang der Achse A, auf verschiedenen Seiten des Armaturenkörpers 2 jeweils eine Stellgliedeinheit 3a, 3b angeordnet ist. Hierbei dient die erste Stellgliedeinheit 3a zur Einstellung einer Mischwassertemperatur und einer Durchflussmenge eines Mischwassers basierend auf nicht aufbereitetem Warm- und Kaltwasser. Die erste Stellgliedeinheit 3a umfasst hierzu eine Einhebel-Mischbatterie 8. Mittels der zweiten Stellgliedeinheit 3b, die in den folgenden Figuren 2, 3 und 7 genauer beschrieben wird, kann eine Menge und eine Aufbereitungsart für nicht aufbereitetes Wasser eingestellt und eine Abgabe der aufbereiteten Menge an Wasser ausgelöst werden.

An dem Armaturenkörper 2 ist weiter über einen Auslaufarm 4 ein Wasserauslauf 5 schwenkbar angeordnet, der mit Mischwasser beaufschlagt werden kann. Des Weiteren ist der Wasserauslauf 5 über eine lösbare Verbindung 56 mit einem Haltearm 6 verbunden, wobei der Haltearm 6 wiederum an dem Armaturenkörper 2 parallel zur Zylinderachse des Armaturenkörpers 2 schwenkbar angeordnet ist. Die lösbare Verbindung 56 kann beispielsweise durch eine magnetische Kraft erfolgen. Auf der Unterseite des Haltearms 6 ist ein weiterer Wasserauslauf 7 angeordnet, über den aufbereitetes Wasser, welches mittels der zweiten Stellgliedeinheit 3b eingestellt werden kann, abgegeben werden kann.

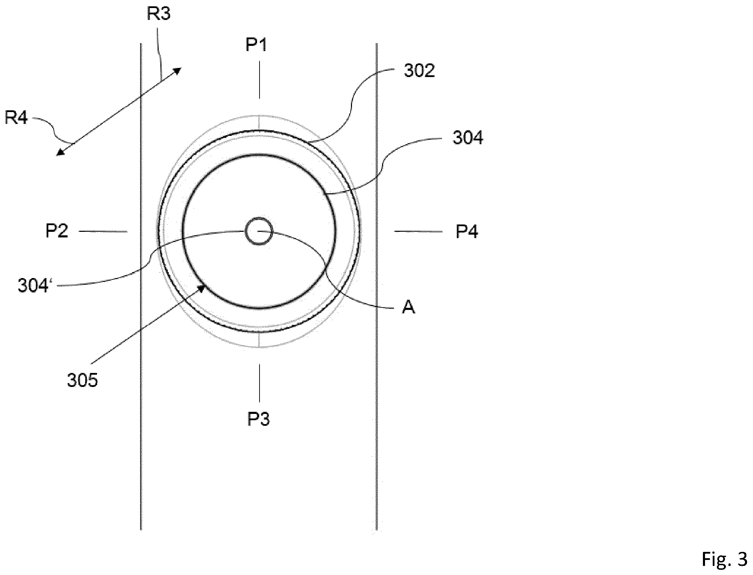

Figur 2 zeigt einen dreidimensionalen Ausschnitt der Sanitärarmatur gemäß Figur 1 und Figur 3 eine axiale Draufsicht auf eine Stellgliedeinheit der Sanitärarmatur der Figur 2.

**In** Figur 2 ist im Detail die zweite Stellgliedeinheit 3b dargestellt. Die zweite Stellgliedeinheit 3b umfasst ein erstes Stellelement 300 in Form eines um eine Achse A drehbaren Rings, welche senkrecht zur Achse des zylindrischen Armaturenkörpers 2 angeordnet ist. Das erste Stellelement 300 dient zur Mengeneinstellung der gewünschten Menge an aufbereitetem Wasser und ist mit einer Zahlenskala für die gewünschte Menge in der Einheit Milliliter beschriftet, hier "100", "200", "300", "500", "750" sowie "0". Die Skala ist hier nichtlinear ausgeführt, kann jedoch in einer weiteren Ausführungsform auch linear ausgeführt werden. Darüber hinaus können auch andere oder abgewandelte Skalen verwendet werden.

Entlang der Achse A in Figur 2 rechts neben dem ersten Stellelement 300 ist eine Markierung 303 angeordnet, welche zum einen eine Zuordnung der eingestellten Menge mittels des ersten Stellelements 300 erlaubt. Zum anderen ist die Markierung 303 als zweite Anzeigeeinrichtung neben einer ersten Anzeigeeinrichtung 301 ausgebildet. Die erste Anzeigeeinrichtung 301 ist auf der linken Seite des ersten Stellelements 300 angeordnet und ringförmig ausgeführt. Mittels der ersten Anzeigeeinrichtung 301 können verschiedene farbliche Darstellungen angezeigt werden, beispielsweise zumindest die Farben rot, weiß, grün, gelb und/oder orange oder dergleichen.

Mittels der zweiten Anzeigeeinrichtung 303 können ebenfalls verschiedene leuchtende Farben angezeigt werden, insbesondere die Farben rot und blau. Jede der beiden Anzeigeeinrichtungen 301, 303 kann ebenfalls die Farbe intermittierend anzeigen, mit anderen Worten ein Blinken in der jeweiligen Farbe bereitstellen. Die Anzeigeeinrichtungen 301, 303 können alternativ oder zusätzlich auch akustische Signale bereitstellen, beispielsweise ein intermittierendes Piepen oder dergleichen.

Weiterhin weist die zweite Stellgliedeinheit 3b ein zweites Stellelement 302 auf, welches ebenfalls ringförmig ausgebildet ist und links neben der ersten Anzeigeeinrichtung 301 angeordnet ist. Das zweite Stellelement 302 weist auf seinem Außenumfang eine Riffelung auf zum besseren Greifen durch einen Nutzer. Das zweite Stellelement 302 ist einerseits drehbar ausgebildet mit Drehrichtungen R3, R4 um die Achse A, andererseits ist dieses auch in axialer Richtung R1, R2 entlang der Achse A beweglich angeordnet. Auf der zur Achse A senkrechten Fläche des zweiten Stellelements 302 ist eine kreisförmige Oberfläche 304 mit einem Auslösepunkt 304' angeordnet, welcher zur Auslösung eines Betätigungselements 305 dient. Mittels des Betätigungselements 305 wird die Abgabe von aufbereitetem Wasser ausgelöst. Das zweite Stellelement 302 kann durch Drehen in Richtung R4 in vier unterschiedliche Rastpositionen P1, P2, P3, P4 gebracht werden. Ein Drehen in die entgegengesetzte Richtung R3 kann zugelassen werden, kann jedoch auch nicht zugelassen werden, sodass ein Benutzer lediglich in Richtung R4 das zweite Stellelement 302 weiterdrehen kann.

In der Draufsicht gemäß Figur 3 sind die unterschiedlichen Positionen P1, P2, P3 und P4 gezeigt, die umfänglich im 90°-Winkel versetzt zueinander angeordnet sind. Wie bereits ausgeführt, ist stirnseitig das Betätigungselement 305 mit der kreisförmigen Oberfläche 304 angeordnet, welche den Auslösepunkt 304' aufweist. Das Betätigungselement 305 kann dabei berührungslos oder mittels Berührung des Auslösepunkts 304' betätigbar ausgebildet sein. Das Betätigungselement 305 kann dabei in Form eines Infrarotsensors ausgebildet sein, sodass bei Berührung des Auslösepunkts 304' der Oberfläche 304 das Betätigungselement 305 ausgelöst wird.

Im Einzelnen wird nun die Bedienung der Sanitärarmatur 1 erläutert. Hierzu befindet sich die Sanitärarmatur 1 zunächst im Ruhezustand/Stand-by-Modus. Dabei ist mittels des ersten Stellelements 300 eine beliebige Menge eingestellt, aber es wird kein aufbereitetes Wasser abgegeben. Die zweite Anzeigeeinrichtung 303 leuchtet dann beispielsweise blau, die erste Anzeigeeinrichtung 301 leuchtet nicht und der Auslösepunkt 304' ist aktiv, das heißt bei einer entsprechenden Berührung wird das Betätigungselement 305 ausgelöst.

Die Sanitärarmatur 1 befindet sich im sogenannten Reinigungsmodus, wenn mittels des ersten Stellelements die Menge "0" eingestellt ist. Beide Anzeigeeinrichtungen 301, 303 leuchten nicht und der Auslösepunkt 304' ist dann abgeschaltet beziehungsweise nicht aktiv. Damit werden Fehlbedienungen bei der Reinigung vermieden. Der Reinigungsmodus kann einerseits so ausgebildet sein, dass eine unbeabsichtigte Wasserabgabe, sei es aufbereitetes und/oder nicht-aufbereitetes Wasser, nicht möglich ist, beispielsweise um die Sanitärarmatur 1 von außen durch Wischen oder dergleichen reinigen zu können. Andererseits kann alternativ oder zusätzlich auch der Reinigungsmodus auch ein gezieltes Durchleiten einer bestimmten Reinigungsflüssigkeit, beispielsweise zum Entkalken oder dergleichen auslösen.

Zur Abgabe von aufbereitetem Wasser, hier in Form von gefiltertem Wasser, wird das erste Stellelement 300 auf eine Zahl eingestellt, das heißt eine bestimmte Menge von gefiltertem Wasser soll abgegeben werden. Die zweite Anzeigeeinrichtung 303 leuchtet dann blau, die erste Anzeigeeinrichtung 301 leuchtet nicht. Die Menge kann entsprechend nun erneut verstellt oder eingestellt werden. Beispielsweise durch Auflegen eines Fingers auf den Auslösepunkt 304' wird das Betätigungselement 305 ausgelöst und initiiert die Abgabe der gewünschten Menge gefilterten Wassers. Hierbei blinkt die zweite Anzeigeeinrichtung 303 blau, die erste Anzeigeeinrichtung 301 leuchtet nicht. Die Abgabe des aufbereiteten Wassers kann durch erneutes Betätigen des Auslösepunkts 304' des Betätigungselements 305 vorzeitig gestoppt werden.

Ausgehend von dem Ruhezustand/Stand-by-Modus werden die folgenden Schritte durchgeführt, um aufbereitetes Wasser in Form von Heißwasser abzugeben beziehungsweise zu zapfen. Zunächst wird das erste Stellelement 300 auf eine beliebige Zahl eingestellt, die der Menge abzugebenden Heißwassers entsprechen kann. Hierbei leuchtet die zweite Anzeigeeinrichtung 303 zunächst blau, die erste Anzeigeeinrichtung 301 leuchtet nicht. Anschließend wird das zweite Stellelement 302 in axialer Richtung R1, also in Richtung auf die erste Anzeigeeinrichtung 301 gedrückt. Danach wird das zweite Stellelement 302 im gedrückten Zustand in Richtung R4 oder in Richtung R3 von einer ersten Rastposition P1, P2, P3, P4 in eine nächste Rastposition P2, P3, P4, P1 gedreht. Anschließend wird das zweite Stellelement 302 losgelassen, wobei sich das zweite Stellelement 302 in Richtung R2 wieder in seine axiale Ausgangsposition bewegt. Die zweite Anzeigeeinrichtung 303 leuchtet nun rot, ebenso wie die erste Anzeigeeinrichtung 301. Die Heißwasserfunktion der Sanitärarmatur 1 ist nun aktiviert, wobei die Menge einzustellenden Heißwassers noch verändert werden kann. Durch Betätigen des Betätigungselements 305, beispielsweise durch Auflegen eines Fingers auf den Auslösepunkt 304' kann die gewünschte Menge kochend heißes Wasser gezapft werden. Hierbei reicht es, den Finger kurzzeitig auf den Auslösepunkt 304' des Betätigungselements 305 aufzulegen, um die gewünschte Menge Heißwasser zu zapfen. Mit anderen Worten muss nach dem Auslösen des Betätigungselements 305 dieses nicht mehr berührt werden. Während der Abgabe blinkt dann die zweite Anzeigeeinrichtung 303 rot und die erste Anzeigeeinrichtung 301 blinkt rot, um die Abgabe von Heißwasser anzuzeigen.

Die Heißwasserfunktion wird für eine gewisse Zeitspanne, beispielsweise für 8 oder 10 Sekunden, nachdem sich das zweite Stellelement 302 wieder in seiner axialen Ruheposition befindet, aktiviert. Während dieser ersten Zeitspanne kann durch Auslösen des Betätigungselements 305 Heißwasser gezapft werden. Wird das Betätigungselement 305 während dieser Zeitspanne nicht betätigt, kehrt die Sanitärarmatur 1 in den Ruhemodus/Stand-by Modus zurück.

Wurde das Betätigungselement 305 während der genannten ersten Zeitspanne aktiviert, mit anderen Worten wurde also Heißwasser gezapft, leuchtet die zweite Anzeigeeinrichtung 303 für eine zweite Zeitspanne rot, wohingegen die erste Anzeigeeinrichtung 301 nicht mehr leuchtet. Dies zeigt einem Benutzer der Sanitärarmatur 1 an, dass Heißwasser in der entsprechenden Leitung zur Abgabe noch bereitsteht. Nach Ablauf der zweiten Zeitspanne ist das Heißwasser abgekühlt und die Sanitärarmatur 1 schaltet in den Ruhemodus/Stand-by Modus, das heißt die zweite Anzeigeeinrichtung 303 leuchtet dann wieder blau. Beispielsweise kann die Dauer der zweiten Zeitspanne 5, 10 oder 15 Minuten betragen.

Während der zweiten Zeitspanne sind andere Aufbereitungsarten beziehungsweise die Abgabe von anderweitig aufbereitetem Wasser außer Heißwasser nicht möglich. Wird innerhalb der zweiten Zeitspanne das Betätigungselement 305 ausgelöst, wird dies durch die zweite Anzeigeeinrichtung 303 optisch angezeigt, beispielsweise durch mehrfaches, insbesondere fünfmaliges rotes Blinken. Darüber hinaus blinkt die erste Anzeigeeinrichtung 301 ebenfalls mehrfach rot, insbesondere korrespondierend zu der zweiten Anzeigeeinrichtung 303. Eine Abgabe von Heißwasser erfolgt jedoch nicht. Erst wenn das Betätigungselement 305 nach der entsprechenden Anzeige durch die erste Anzeigeeinrichtung 301 und durch die zweite Anzeigeeinrichtung 303 erneut betätigt wird, kann dann aufbereitetes Wasser in einer anderen Aufbereitungsart als Heißwasser gezapft werden, welches dann insbesondere nach dem Heißwasser, welches sich noch in den Zuläufen zu dem jeweiligen Auslass befindet, abgegeben wird.

Während der Abgabe von Heißwasser kann dessen Abgabe jederzeit unterbrochen werden, indem das zweite Stellelement 302 in axialer Richtung R1 bewegt, genauer gedrückt, wird. Ebenso kann die Abgabe mittels Betätigen des Betätigungselements 305 unterbrochen werden und durch erneutes Betätigen wieder fortgesetzt werden.

Erfolgt keine Unterbrechung der Abgabe von Heißwasser kann die Abgabe von Heißwasser auch folgendermaßen erfolgen: Sollen beispielsweise 500 ml Heißwasser abgegeben werden, und beträgt beispielsweise das Volumen in der Leitung von einer Heißwasserbereitstellungseinrichtung wie einem Boiler oder dergleichen 30 ml, wird zunächst 30 ml kaltes Wasser abgegeben, gefolgt von Heißwasser aus dem Boiler, dessen Temperatur oberhalb der Wunschtemperatur liegt, jedoch bei Mischung mit dem 30 ml Kaltwasser nach Abgabe von 470 ml Heißwasser oberhalb der Wunschtemperatur, 500 ml Heißwasser der gewünschten Temperatur ergibt. Das Heißwasser wird dabei so abgegeben, dass nach Abgabe der 500 ml am Wasserauslass 7 wieder Kaltwasser bereitgestellt wird.

Ausgehend vom Ruhemodus/Stand-by-Modus kann bei Abgabe von gefiltertem Wasser die zweite Anzeigeeinrichtung 303 entsprechend der Filternutzung eine Anzeige bereitstellen, beispielsweise durch grünes Blinken, was die nicht ordnungsgemäße Funktion des Filters anzeigt. Wird somit das Betätigungselement 305 betätigt und es wird aufbereitetes Wasser, insbesondere gefiltertes Wasser bereitgestellt, blinkt beispielsweise die zweite Anzeigeeinrichtung 303 grün, sodass einem Nutzer der Sanitärarmatur 1 angezeigt wird, dass die Filterkartusche ausgetauscht werden muss. Bei der Abgabe von Heißwasser kann ein ordnungsgemäß arbeitender Filter durch ein wechselweises Blinken in den Farben grün und rot der zweiten Anzeigeeinrichtung 303 angezeigt werden. Es kann auch durch eine andere Farbe der zweiten Anzeigeeinrichtung 303 angezeigt werden, dass die Kapazität des Filters erschöpft ist, mit anderen Worten dieser ausgetauscht werden muss. Wird gefiltertes Wasser gezapft beziehungsweise abgegeben, leuchtet die zweite Anzeigeeinrichtung 303 beispielsweise blau und die erste Anzeigeeinrichtung 301 blinkt grün. Wird Heißwasser gezapft beziehungsweise abgegeben, leuchtet beispielsweise die zweite Anzeigeeinrichtung 303 rot und die erste Anzeigeeinrichtung blinkt grün.

Figur 4 zeigt ein Sanitärsystem gemäß einer Ausführungsform der vorliegenden Erfindung und Figur 5 eine Steuerungseinrichtung des Sanitärsystems gemäß Figur 4 in schematischer Form.

Figur 4 zeigt im Detail ein Sanitärsystem 200 umfassend eine Sanitärarmatur 1 gemäß den Figuren 1-3 sowie eine Aufbereitungseinrichtung 201 und eine Steuerungseinrichtung 100. Im Einzelnen ist eine Filtereinrichtung 106 angeordnet, die mit einer Kaltwasserleitung 21b zur Zufuhr von Kaltwasser verbunden ist. Mittels der Filtereinrichtung 106 kann dann über eine Leitung 20c, die Steuerungseinrichtung 100 und über eine Leitung 20, die mit dem Wasserauslauf 7 verbunden ist, gefiltertes Wasser zur Verfügung gestellt werden. Dieses gefilterte Wasser wird durch eine Durchflussmesseinrichtung 105 der Steuerungseinrichtung 100 geführt und die durchgeflossene Menge gemessen. Die Steuerungseinrichtung 100 ist ausgebildet, anhand der Menge des gemessenen Durchflusses zu ermitteln, wann eine Filterkartusche der Filtereinrichtung 106 gewechselt werden muss. Stromabwärts der Durchflussmesseinrichtung 105 ist eine Mengensteuereinheit 110 angeordnet, welche eine Mehrzahl von Ventilen 111, 113 aufweist. Mit dieser ist über eine Zuführleitung 20b und eine Sicherungseinrichtung 104 ein Hochdruckboiler 103 für Heißwasser verbunden, der mit einer Heizeinrichtung 107 verbunden ist. Über eine zweite Leitung 20a kann dann über die Mengensteuereinheit 110 die Leitung 20 mit Heißwasser beaufschlagt und über den Wasserauslass 7 ausgegeben werden.

Die Steuerungseinrichtung 100 weist eine elektronische Steuerung 101 auf und ist über eine Signalleitung 130 mit den beiden Stellelementen 300, 302, den beiden Anzeigeeinrichtungen 301, 303 sowie mit dem Betätigungselement 305 zur entsprechenden Steuerung beziehungsweise Betätigung derselben verbunden. Die Steuerungseinrichtung 100 ist weiter mit einer Stromversorgung 102 für deren Betrieb verbunden. Über die Leitung 20 kann über den Wasserauslass 7 gefiltertes Wasser oder Heißwasser ausgegeben werden. Die Warmwasserleitung 21a und die Kaltwasserleitung 21b sind über die erste Stellgliedeinheit 3a mit einer Mischerkartusche mit dem ersten Wasserauslass 5 verbunden und es kann über diesen entsprechend Mischwasser mit entsprechender Temperatur ausgegeben werden.

Figur 5 zeigt nun die Steuerungseinrichtung 100 im Detail. Die Steuerungseinrichtung 100 weist neben der elektronischen Steuerung 101 einen Bildschirm 120 in Form eines Touchpanels oder dergleichen auf, mit dem die Steuerungseinrichtung 100 programmiert werden kann, beispielsweise die entsprechenden Zeitspannen für die Bereitstellung der Heißwasserfunktionen nach Betätigen des zweiten Betätigungselements 300, das Einstellen der Filterkapazität in Abhängigkeit der Wasserhärte oder dergleichen. Die Sicherungseinrichtung 104 dient dazu einen Überdruck beim Aufheizen in dem Heißwasserboiler 103 zu vermeiden.

Die Steuerungseinrichtung 100 ist weiter so ausgebildet, dass ein Benutzer, wenn dieser eine Menge an aufbereitetem Wasser - allgemein gilt dies für jedes Fluid beziehungsweise Flüssigkeit - wählt, dieses so bereitgestellt wird, dass
- die abgegebene Menge an Wasser der gewählten Menge entspricht, gleichzeitig
- in der abgegebenen Menge an Wasser ein Anteil an nicht-aufbereitetem Wasser vorhanden ist, derart, dass der Grad der Aufbereitung des aufbereiteten Wasser dem gewählten Grad entspricht und das am Wasserauslass - hier mit Bezugszeichen 7 bezeichnet - nicht-aufbereitetes Wasser nach Abgabe der eingestellten Menge vorhanden ist.

Mit anderen Worten ist die Steuerungseinrichtung 100 beispielsweise folgendermaßen ausgebildet: Bei der Aufbereitungsart "karbonisiertes Wasser" mit einem lediglich beispielhaft gewählten Karbonisierungsgrad "2" wird das Wasser mit einem Karbonisierungsgrad 2,2 aufbereitet, also mit einem höheren als dem eingestellten Karbonisierungsgrad. Soll nun eine Menge von 0,5 l abgegeben werden, wird karbonisiertes Wasser mit Grad "2,2" in der Menge 416,6666 ml bereitgestellt. Diese Menge wird dann zunächst abgegeben. Anschließend wird die Menge 500 ml - 416,666 ml = 83,333 ml nicht-aufbereitetes Wasser als Neutralflüssigkeit, das heißt mit Karbonisierungsgrad "1" abgegeben, sodass im Schnitt 500 ml mit einem Karbonisierungsgrad "2" abgegeben wurden. Dies macht ein zusätzliches Spülen der Leitung mit Neutralflüssigkeit, beispielsweise beim Hinzufügen von Fruchtsaftkonzentrat zu nicht-aufbereitetem Wasser oder dergleichen unnötig. Ein Nachlauf am Auslass wird dadurch vermieden.

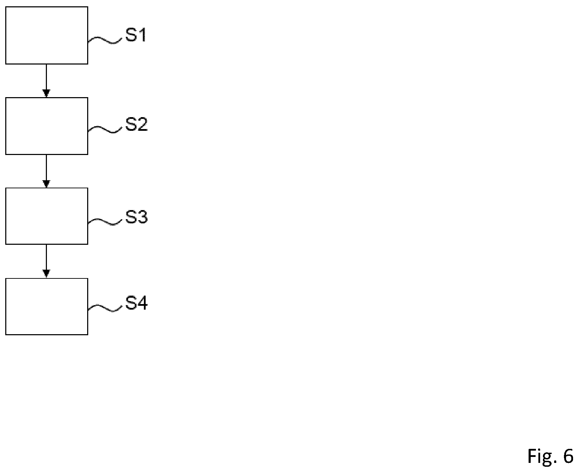

Figur 6 zeigt ein Verfahren zum Bereitstellen und Ausgeben von aufbereiteter Flüssigkeit.

Figur 6 zeigt ein Verfahren zum Bereitstellen und Abgeben von aufbereitetem Wasser für Getränke mit einer Sanitärarmatur gemäß einem der Ansprüche 1-6.

Das Verfahren umfasst dabei die folgenden Schritte:
In einem ersten Schritt S1 erfolgt ein Einstellen einer Menge abzugebender aufbereiteter Flüssigkeit mittels des ersten Stellelements.

In einem weiteren Schritt S2 oder S2' erfolgt ein Bereitstellen oder Einstellen zumindest einer Aufbereitungsart aus zumindest zwei unterschiedlichen Aufbereitungsarten von nicht-aufbereiteter Flüssigkeit mittels des zweiten Stellelements.

In einem weiteren Schritt S3 erfolgt ein Betätigen des Betätigungselements.

In einem weiteren Schritt S4 erfolgt ein Abgeben von aufbereiteter Flüssigkeit und einer Neutralflüssigkeit, insbesondere nicht-aufbereiteter Flüssigkeit, vorzugsweise Wasser, derart, dass vor Erreichen der eingestellten Menge ausschließlich Neutralflüssigkeit zur Abgabe bereitgestellt und abgegeben wird und dass beim Erreichen der eingestellten Menge die Abgabe gestoppt wird.

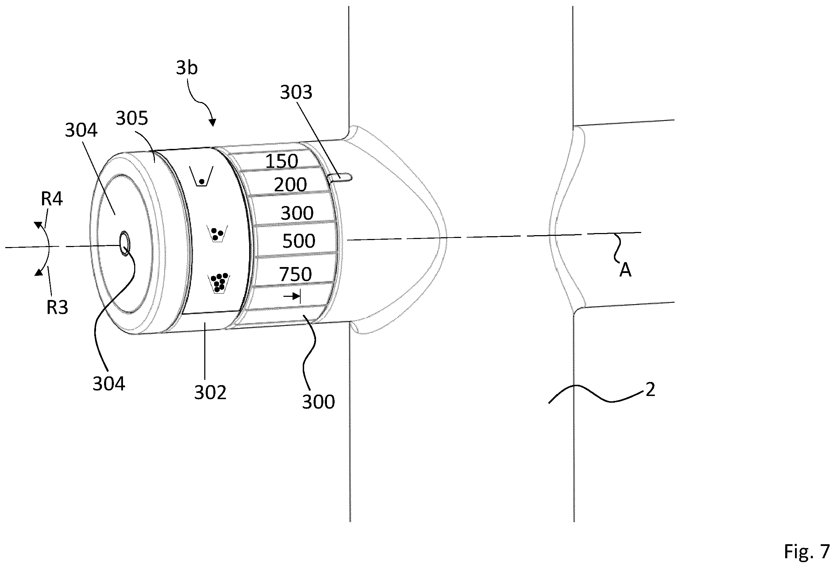

Figur 7 zeigt einen dreidimensionalen Ausschnitt der Sanitärarmatur gemäß einer weiteren Ausführungsform der vorliegenden Erfindung.

Figur 7 zeigt im Wesentlichen eine Sanitärarmatur 1 gemäß der Figur 2. Im Unterschied zur Sanitärarmatur 1 gemäß Figur 2 weist die Sanitärarmatur 1 gemäß Figur 7 nun ein zweites Stellelement 302 auf, mit dem der Karbonisierungsgrad von auszugebendem Wasser eingestellt werden kann. Das zweite Stellelement 302 kann hierzu beispielsweise in verschiedenen Rastposition P1, P2, P3, P4 die Auswahl einer Ausgabe von karbonisiertem Wasser mit unterschiedlichem Karbonisierungsgrad ermöglichen. Die Rastpositionen P1-P4 unterscheiden sich hierbei von den Rastpositionen P1-P4 der Figur 3. Alternativ ist es ebenso denkbar, beispielsweise drei oder mehr Stellelemente nebeneinander anzuordnen oder ineinander zu integrieren, beispielsweise die in Figur 7 gezeigte Ausführungsform mit den beiden Stellelementen 300, 302 mit dem axial verschieblichen Stellelement 302 der Ausführungsform der

Figur 2 und der Anzeigeeinrichtung 301 zu ergänzen, so dass von links nach rechts in Figur 7, sich die folgende Anordnung ergibt: zweites Stellelement 302 zur Einstellung des Karbonisierungsgrads und gleichzeitig zur Einstellung von Heißwasser mit integriertem ringförmigem Betätigungselement 305, wobei die Heißwasserfunktion durch axiales Verschieben gemäß Figur 2 ausgelöst werden kann, Anzeigeeinrichtung 301, erstes Stellelement 300 zur Mengeneinstellung und rechts daneben die zweite Anzeigeeinrichtung 303.

Zusammenfassend weist zumindest eine der Ausführungsformen der Erfindung zumindest einen der folgenden Vorteile auf:
- Nur Abgabe der angeforderten Menge in der angeforderten Aufbereitungsart
- Automatisches Stoppen nach der Abgabe
- Kein Nachlauf an der Sanitärarmatur
- Hohe Flexibilität
- Einfache Herstellung und Implementierung
- Einfache Durchführung
- Zuverlässige und flexible Abgabe von aufbereitetem Wasser

Die vorliegende Erfindung wurde anhand bevorzugter Ausführungsbeispiele beschrieben.

## Patentansprüche

1. Sanitärarmatur (1) zum Abgeben von aufbereiteten Flüssigkeiten, insbesondere für Getränke,
umfassend
ein erstes Stellelement (300) zur Mengeneinstellung der abzugebenden aufbereiteten Flüssigkeit und ein Betätigungselement (305) zum Bereitstellen der mittels des erstes Stellelements (300) eingestellten Menge an aufbereiteter Flüssigkeit,
wobei
zumindest ein zweites Stellelement (302) zur Auswahl einer Aufbereitungsart, insbesondere aus zumindest zwei unterschiedlichen Aufbereitungsarten, von nicht-aufbereiteter Flüssigkeit angeordnet ist, wobei erstes und das zumindest eine zweite Stellelement (300, 302) unabhängig voneinander betätigbar sind, wobei das erste und zweite Stellelement (300, 302) jeweils mittels einer Drehbewegung (R3, R4) und das zweite Stellelement (302) zusätzlich mittels einer Axialbewegung (R1, R2) betätigbar sind, vorzugsweise wobei das zweite Stellelement (302) zumindest zwei, insbesondere vier definierte Rastpositionen (P1, P2, P3, P4) bei einer Drehbewegung (R3, R4) aufweist, vorzugsweise wobei eine erste Anzeigeeinrichtung (301) angeordnet ist, die ausgebildet ist, zumindest zwei verschiedene Aufbereitungsarten anzuzeigen und/oder wobei eine zweite Anzeigeeinrichtung (303) angeordnet ist, die ausgebildet ist, zumindest einen Betriebszustand der Sanitärarmatur (1) anzuzeigen.

2. Sanitärarmatur gemäß Anspruch 1, **dadurch gekennzeichnet, dass** zumindest eine Anzeigeeinrichtung (301, 303) zur optischen und/oder akustischen Anzeige ausgebildet ist, insbesondere wobei mittels der zumindest einen Anzeigeeinrichtung (301, 303), welche zur optischen Anzeige ausgebildet ist, zumindest drei optisch verschiedene Anzeigen bereitstellbar sind.

3. Sanitärarmatur gemäß Anspruch 2, **dadurch gekennzeichnet, dass** zwei Anzeigeeinrichtungen (301, 303) angeordnet sind, die auf axial unterschiedlichen Seiten des ersten Stellelements (300) angeordnet sind.

4. Sanitärarmatur gemäß einem der Ansprüche 1-3, **dadurch gekennzeichnet, dass** das Betätigungselement (305) mittels
a) Berührung und/oder
b) Drücken oder
c) berührungslos
betätigbar ist, insbesondere wobei das Betätigungselement (305) zur Erkennung von Gesten ausgebildet ist.

5. Sanitärarmatur gemäß einem der Ansprüche 1-4, **dadurch gekennzeichnet, dass** eine Einhebel-Mischbatterie (8) zur Ausgabe von nicht-aufbereitetem Warm- und Kaltwasser angeordnet ist, vorzugsweise wobei zumindest zwei separate Ausläufe (5, 7) angeordnet sind, wobei zumindest einer der Ausläufe (5) ausschließlich zur Ausgabe des nicht-aufbereiteten Warm- und Kaltwassers ausgebildet ist, und wobei der zumindest eine weitere Auslauf (7) zur Ausgabe der aufbereiteten Flüssigkeit ausgebildet ist.

6. Sanitärarmatur gemäß einem der Ansprüche 1-5, **dadurch gekennzeichnet, dass** mehrere zweite Stellelemente (302) angeordnet sind, die unabhängig voneinander betätigbar sind.

7. Sanitärsystem (200) zum Bereitstellen von aufbereiteten Flüssigkeiten, insbesondere für Getränke, umfassend
eine Sanitärarmatur (1) gemäß einem der Ansprüche 1-6,
eine Aufbereitungseinrichtung (101, 102, 103, 104, 105, 106), welche mit der Sanitärarmatur (1) zum Bereitstellen von aufbereiteter Flüssigkeit verbunden ist, und eine Steuerungseinrichtung (100), welche einerseits mit der Sanitärarmatur (1), andererseits mit der Aufbereitungseinrichtung (101, 102, 103, 104, 105, 106) verbunden ist, zur Steuerung der Sanitärarmatur (1) und der Aufbereitungseinrichtung (101, 102, 103, 104, 105, 106), vorzugsweise
wobei die Aufbereitungseinrichtung (101, 102, 103, 104, 105, 106) zumindest eine der folgenden Einrichtungen umfasst: Filtereinrichtung (106), Heizeinrichtung (107), Vorratseinrichtung (103), Konzentrationseinrichtung, Karbonisierungseinrichtung, Kühleinrichtung.

8. Sanitärsystem gemäß Anspruch 7, **dadurch gekennzeichnet, dass** eine Durchflussmesseinrichtung (105) zur Messung des Durchflusses der Flüssigkeit, insbesondere des Durchflusses von Wasser durch die Filtereinrichtung (106), angeordnet ist und/oder
dass die Steuerungseinrichtung (100) mit der Durchflussmesseinrichtung (105) verbunden ist und ausgebildet ist, anhand des gemessenen Durchflusses eine Lebensdauer eines Filters der Filtereinrichtung (106) zu berechnen und anhand zumindest einer der Anzeigeeinrichtungen (301, 303) der Sanitärarmatur (1) anzuzeigen.

9. Sanitärsystem gemäß einem der Ansprüche 7-8, **dadurch gekennzeichnet, dass** die Filtereinrichtung (106) über ein erstes mittels der Steuerungseinrichtung (100) steuerbares Ventil (110) mit der Sanitärarmatur (1) und die Vorratseinrichtung (103) über ein zweites mittels der Steuerungseinrichtung steuerbares Ventil mit der Sanitärarmatur (1) verbunden sind, vorzugsweise
wobei zumindest eines der Ventile (110, 111) als Magnetventil ausgebildet ist.

10. Sanitärsystem gemäß einem der Ansprüche 7-9, **dadurch gekennzeichnet, dass** das Sanitärsystem (200) ausgebildet ist, eine eingestellte Menge von Flüssigkeit in einer gewählten Aufbereitungsart abzugeben derart, dass
- vor Erreichen der vollständigen Abgabe der eingestellten Menge ausschließlich eine Neutralflüssigkeit, insbesondere nicht-aufbereitete Flüssigkeit, abgegeben wird und dass
- nach vollständigem Abgeben der eingestellten Menge die Abgabe gestoppt wird,
sodass nach vollständiger Abgabe der eingestellten Menge, aufbereitete Flüssigkeit in der eingestellten Menge und Aufbereitungsart abgegeben wurde.

## Claims

1. Sanitary fitting (1) for dispensing prepared liquids, in particular for beverages,
comprising
a first adjustment element (300) for adjusting the quantity of the prepared liquid which is intended to be dispensed and an activation element (305) for providing the quantity, which is adjusted by means of the first adjustment element (300), of prepared liquid,
wherein
at least one second adjustment element (302) for selecting a preparation type, in particular from at least two different preparation types, of non-prepared liquid is arranged, wherein the first and the at least one second adjustment element (300, 302) can be activated independently of each other, wherein the first and second adjustment elements (300, 302) can be activated in each case by means of a rotational movement (R3, R4) and the second adjustment element (302) can additionally be activated by means of an axial movement (R1, R2), preferably wherein the second adjustment element (302) has at least two, in particular four defined locking positions (P1, P2, P3, P4) during a rotational movement (R3, R4), preferably wherein there is arranged a first display device (301) which is constructed to display at least two different preparation types, and/or wherein a second display device (303) which is constructed to display at least one operating state of the sanitary fitting (1) is arranged.

2. Sanitary fitting according to claim 1, **characterised in that** at least one display device (301, 303) for visual and/or acoustic display is constructed, in particular wherein at least three visually different displays can be provided by means of the at least one display device (301, 303) which is constructed for visual display.

3. Sanitary fitting according to claim 2, **characterised in that** there are arranged two display devices (301, 303) which are arranged at axially different sides of the first adjustment element (300).

4. Sanitary fitting according to any one of claims 1 to 3, **characterised in that** the activation element (305) can be activated by means of
a) contact and/or
b) pressing or
c) in a contactless manner,
in particular wherein the activation element (305) is constructed for identification of gestures.

5. Sanitary fitting according to any one of claims 1 to 4, **characterised in that** a single-lever mixer tap (8) for dispensing non-prepared hot and cold water is arranged, preferably wherein at least two separate outlets (5, 7) are arranged, wherein at least one of the outlets (5) is constructed exclusively for dispensing the non-prepared hot and cold water, and wherein the at least one additional outlet (7) is constructed for dispensing the prepared liquid.

6. Sanitary fitting according to any one of claims 1 to 5, **characterised in that** there are arranged a plurality of second adjustment elements (302) which can be activated independently of each other.

7. Sanitary system (200) for providing prepared liquids, in particular for beverages, comprising
a sanitary fitting (1) according to any one of claims 1 to 6,
a preparation device (101, 102, 103, 104, 105, 106) which is connected to the sanitary fitting (1) for providing prepared liquid, and
a control device (100) which is connected on the one hand to the sanitary fitting (1), on the other hand to the preparation device (101, 102, 103, 104, 105, 106) in order to control the sanitary fitting (1) and the preparation device (101, 102, 103, 104, 105, 106), preferably
wherein the preparation device (101, 102, 103, 104, 105, 106) comprises at least one of the following devices: filter device (106), heating device (107), storage device (103), concentration device, carbonisation device, cooling device.

8. Sanitary system according to claim 7, **characterised in that** a throughflow measurement device (105) for measuring the throughflow of the liquid, in particular the throughflow of water through the filter device (106) is arranged,
and/or
**in that** the control device (100) is connected to the throughflow measurement device (105) and is constructed, with reference to the measured throughflow, to calculate a service-life of a filter of the filter device (106) and to display it using at least one of the display devices (301, 303) of the sanitary fitting (1).

9. Sanitary system according to either claim 7 or 8, **characterised in that** the filter device (106) is connected to the sanitary fitting (1) by means of a first valve (110) which can be controlled by means of the control device (100) and the storage device (103) is connected to the sanitary fitting (1) by means of a second valve which can be controlled by means of the control device, preferably wherein at least one of the valves (110, 111) is in the form of a solenoid valve.

10. Sanitary system according to any one of claims 7 to 9, **characterised in that** the sanitary system (200) is constructed to dispense an adjusted quantity of liquid in a selected preparation type in such a manner that,
- before achieving the complete dispensing of the adjusted quantity, exclusively a neutral liquid, in particular a non-prepared liquid, is dispensed, and **in that**,
- after complete dispensing of the adjusted quantity, the dispensing is stopped so that, after complete dispensing of the adjusted quantity, prepared liquid has been dispensed in the adjusted quantity and preparation type.

## Revendications

1. Robinet sanitaire (1) pour distribuer des liquides traités, en particulier pour des boissons,
comprenant
un premier élément de réglage (300) pour le réglage de la quantité de liquide traité à distribuer et un élément d'actionnement (305) pour fournir la quantité réglée de liquide traité au moyen du premier élément de réglage (300),
où
au moins un deuxième élément de réglage (302) pour la sélection d'un type de traitement, en particulier parmi au moins deux types de traitement différents, de liquide non traité est disposé, où le premier et le au moins un deuxième élément de réglage (300, 302) sont actionnables indépendamment l'un de l'autre, où le premier et le deuxième élément de réglage (300, 302) sont chacun actionnables au moyen d'un mouvement de rotation (R3, R4) et le deuxième élément de réglage (302) est en outre actionnable au moyen d'un mouvement axial (R1, R2), de préférence où le deuxième élément de réglage (302) présente au moins deux, en particulier quatre positions d'arrêt définies (P1, P2, P3, P4) lors d'un mouvement de rotation (R3, R4), de préférence où un premier dispositif d'affichage (301) est disposé, qui est conçu pour afficher au moins deux types de traitement différents et/ou où un deuxième dispositif d'affichage (303) est disposé, qui est conçu pour afficher au moins un état de fonctionnement du robinet sanitaire (1).

2. Robinet sanitaire selon la revendication 1, **caractérisé en ce qu'**au moins un dispositif d'affichage (301, 303) est conçu pour un affichage optique et/ou acoustique, en particulier où au moyen du au moins un dispositif d'affichage (301, 303), qui est conçu pour un affichage optique, au moins trois affichages optiquement différents pouvant être fournis.

3. Robinet sanitaire selon la revendication 2, **caractérisé en ce que** deux dispositifs d'affichage (301, 303) sont disposés, qui sont disposés sur des côtés axiaux différents du premier élément de réglage (300).

4. Robinet sanitaire selon l'une des revendications 1-3, **caractérisé en ce que** l'élément d'actionnement (305) est actionnable par
a) contact et/ou
b) pression ou
c) sans contact,
en particulier où l'élément d'actionnement (305) est conçu pour la reconnaissance de gestes.

5. Robinet sanitaire selon l'une des revendications 1-4, **caractérisé en ce qu'**un mitigeur monocommande (8) pour la distribution d'eau chaude et d'eau froide non traitées est disposé, de préférence où au moins deux becs de sortie séparés (5, 7) sont disposés, où au moins un des becs de sortie (5) est conçu exclusivement pour la distribution de l'eau chaude et de l'eau froide non traitées, et où le au moins un autre bec de sortie (7) est conçu pour la distribution du liquide traité.

6. Robinet sanitaire selon l'une des revendications 1-5, **caractérisé en ce que** plusieurs deuxièmes éléments de réglage (302) sont disposés, qui sont actionnables indépendamment les uns des autres.

7. Système sanitaire (200) pour fournir des liquides traités, en particulier pour des boissons, comprenant
un robinet sanitaire (1) selon l'une des revendications 1-6,
un dispositif de traitement (101, 102, 103, 104, 105, 106), qui est relié au robinet sanitaire (1) pour fournir du liquide traité, et
un dispositif de commande (100), qui est d'une part relié au robinet sanitaire (1), d'autre part au dispositif de traitement (101, 102, 103, 104, 105, 106), pour la commande du robinet sanitaire (1) et du dispositif de traitement (101, 102, 103, 104, 105, 106), de préférence
où le dispositif de traitement (101, 102, 103, 104, 105, 106) comprend au moins une des installations suivantes : dispositif de filtration (106), dispositif de chauffage (107), dispositif de stockage (103), dispositif de concentration, dispositif de carbonatation, dispositif de refroidissement.

8. Système sanitaire selon la revendication 7, **caractérisé en ce qu'**un dispositif de mesure de débit (105) pour la mesure du débit du liquide, en particulier du débit d'eau à travers le dispositif de filtration (106), est disposé et/ou **en ce que** le dispositif de commande (100) est relié au dispositif de mesure de débit (105) et est conçu pour calculer, sur la base du débit mesuré, une durée de vie d'un filtre du dispositif de filtration (106) et pour afficher, sur la base d'au moins un des dispositifs d'affichage (301, 303) du robinet sanitaire (1).

9. Système sanitaire selon l'une des revendications 7-8, **caractérisé en ce que** le dispositif de filtration (106) est relié au robinet sanitaire (1) par une première vanne (110) pouvant être commandée au moyen du dispositif de commande (100) et le dispositif de stockage (103) est relié au robinet sanitaire (1) par une deuxième vanne pouvant être commandée au moyen du dispositif de commande, de préférence
où au moins une des vannes (110, 111) est conçue comme une électrovanne.

10. Système sanitaire selon l'une des revendications 7-9, **caractérisé en ce que** le système sanitaire (200) est conçu pour distribuer une quantité réglée de liquide dans un type de traitement choisi de telle sorte que
- avant d'atteindre la distribution complète de la quantité réglée, exclusivement un liquide neutre, en particulier un liquide non traité, est distribué et que
- après la distribution complète de la quantité réglée, la distribution est arrêtée, de sorte qu'après la distribution complète de la quantité réglée, un liquide traité dans la quantité réglée et le type de traitement choisi a été distribué.
